# FASCICULE DE BREVET EUROPEEN

(11) **EP 2 818 075 B1**
(45) Date de publication et mention de la délivrance du brevet: **09.08.2017**
(21) Numéro de dépôt: 14179130.1
(22) Date de dépôt: 11.06.2009
(51) Int. Cl.: A45D 34/02, B05D 5/06, B05D 7/22, C03C 17/00, C03C 17/30, A45D 34/00

(54) **Procédé de décoration d'un flacon transparent**
Dekorationsverfahren eines durchsichtigen Flakons
Method for decorating a transparent flask

(30) Priorité: 16.06.2008 FR 0803351; 15.12.2008 FR 0807039
(43) Date de publication de la demande: 31.12.2014
(62) Demande divisionnaire de: 09162515.2
(73) Titulaire: Pochet du Courval, 92110 Clichy (FR)
(72) Inventeur: Gourde, Armel, 80220 Gamaches (FR); Clark, Jonathan, Nutley, NJ 07110 (US)
(74) Mandataire: Derambure Conseil

(56) Documents cités:
- EP-A- 1 552 764
- WO-A-03/007868
- WO-A1-2010/029073
- FR-A- 2 851 940

## Description

La présente invention concerne un procédé de décoration d'un flacon transparent ou translucide en verre, destiné au domaine de la cosmétique, par la réalisation d'un revêtement interne afin de réaliser un décor à l'intérieur du flacon. Ledit revêtement interne étant tel que le contenu du flacon, parfum, crème ou autre, soit protégé contre toute migration éventuelle nuisible à sa qualité, comme par exemple nuisible à sa fragrance et/ou sa coloration ainsi qu'à sa conservation. L'esthétique de tels produits est, de nos jours, un élément important de choix pour les acheteurs. Aussi, quel que soit le domaine dans lequel ils exercent, les fabricants cherchent à donner à leurs produits la meilleure esthétique possible, de façon à provoquer un réflexe d'achat par les consommateurs.

Le domaine de la mode, de la bijouterie, de la cosmétique, et de la parfumerie sont, bien entendu, très concernés par l'esthétique des produits, notamment de leur conditionnement, et tout un chacun a pu constater que, particulièrement les parfumeurs, cherchent à attirer la clientèle par des flacons qui se différencient de la concurrence en proposant leurs parfums dans des flacons de plus en plus esthétiques et originaux dans leurs formes et leurs décors.

On connaît déjà des procédés de décoration d'un flacon transparent ou translucide selon lesquels, la décoration est réalisée à l'intérieur du flacon, grâce à une laque de couleur qui est pulvérisée à l'intérieur du flacon. Ce procédé est divulgué par exemple par le brevet FR 2 851 940. Grâce à ce procédé, il est possible de réaliser un décor intérieur comprenant, par exemple, une seule couche de revêtement décoratif, voire plusieurs couches. Les laques utilisées sont des laques époxy ou polyuréthane liquides, ou des laques réalisées à l'aide de poudre sans solvant de type époxy, polyuréthane, polyester, voire polyéthylène et ses dérivés. Toutefois ce type de décoration, s'il permet de réaliser de magnifiques décorations, pose un problème car la plupart des parfums susceptibles de remplir les flacons ainsi décorés, peuvent présenter une incompatibilité avec la nature de la ou des couches de décoration qui peuvent polluer et dégrader ces parfums. Une solution à ce problème consiste à procéder en une étape finale au dépôt d'une couche de nature à faire barrage à la migration vers le parfum des ingrédients néfastes des couches de laques.

On connaît aussi de la demande de brevet FR 2 889 485, un procédé selon lequel la ou les couches de décoration internes est une couche en émail. Toutefois ce type de procédé présente l'inconvénient d'avoir à procéder à une cuisson par un chauffage à une température importante par exemple 800°C, ce qui rend le procédé coûteux et inutilisable pour des flacons en matière plastique. EP 1 552 764 A et WO2010/029073A divulguent aussi un procédé de décoration d'un flacon.

On entendra par flacon, tout type de conditionnement pour produits cosmétiques tels que parfum, eau de Cologne, crème et autres.

L'invention propose un nouveau procédé de décoration permettant la décoration d'un flacon par l'intérieur, ce qui permet d'obtenir un décor particulièrement élégant et dont le produit cosmétique est protégé des agressions grâce à une couche faisant barrage en isolant ledit produit, ledit flacon pouvant être en verre .

Selon le procédé de l'invention, la décoration est réalisée à l'intérieur de ce dernier, de façon à recouvrir la surface intérieure d'un décor, constitué par un revêtement interne en contact avec le produit cosmétique. Selon le procédé de décoration, il est réalisé au moins une couche de décoration sachant, comme on le verra plus loin, que la décoration peut être réalisée grâce à plusieurs couches de revêtement, dont la couche en contact permanent avec le parfum est la couche interne inerte. Cette dernière a des propriétés proches du verre.

Ainsi, le procédé de décoration d'un flacon transparent ou translucide en verre destiné au domaine de la cosmétique, pour contenir un liquide tel qu'un parfum, ou similaire, selon l'invention, est caractérisé en ce que la décoration est réalisée à l'intérieur du flacon, grâce à la réalisation d'au moins une couche décorative interne par pulvérisation. Cette couche étant inerte chimiquement de caractéristique proche du verre, permet d'isoler le parfum.
On prévoit ainsi un procédé de décoration selon la revendication 1.
En variante, on pourra mettre en oeuvre les caractéristiques des revendications dépendantes.

Selon l'invention la couche interne inerte en contact avec le parfum, déposée intérieurement est une couche d'un produit inorganique à base de Silice et pigments, et est avantageusement un polymère inorganique réalisé par le procédé "SOLGEL", La couche ainsi déposée est un polymère inerte dont les caractéristiques sont proches du verre.

La couche décorative formant le revêtement interne, est réalisée par pulvérisation à l'intérieur du flacon d'un liquide coloré ou non, directement sur le verre, à l'aide d'un pistolet pneumatique basse pression qui comporte une rallonge pouvant s'introduire à l'intérieur du flacon, portant à son extrémité une buse de pulvérisation. Pendant la pulvérisation, on met en mouvement relatif la buse et le flacon afin de déposer une couche homogène. Ainsi la buse de pulvérisation peut être déplacée verticalement en tournant sur elle-même. Mais on peut aussi déplacer verticalement la buse et faire tourner le flacon autour de l'axe constitué par la buse. Mais l'on pourrait aussi mettre en mouvement le flacon, en le déplaçant verticalement et en le faisant tourner par rapport à la buse de pulvérisation.

La pulvérisation interne se fait sur un flacon chaud, ainsi dans une étape précédant l'étape de pulvérisation, il est procédé au chauffage du flacon le chauffage pouvant être fait, par exemple, par air chaud ou passage en étuve, de façon à amener le flacon à une température d'environ 40 à 50°C.

Notons que la pulvérisation faite grâce à la buse de pulvérisation introduite dans le flacon par son embouchure, est telle que la buse disposée à l'extrémité d'un tube de pulvérisation, est constituée avantageusement par une canalisation centrale comprenant, un ensemble de trous radiaux reliés à un réservoir contenant le produit à pulvériser. Bien entendu, la buse de pulvérisation peut avoir toute autre construction.

La pulvérisation se fait donc avec un liquide à température ambiante dans un flacon chaud, Dans une étape supplémentaire faisant suite à l'étape de pulvérisation, il est procédé à un séchage puis à un refroidissement.

On a compris que la pulvérisation du liquide se fait dans un flacon chauffé avant sa pulvérisation pour améliorer l'accrochage de la couche de décor sur la surface interne du flacon.

Selon le procédé de l'invention, on peut, par exemple, préalablement à la couche définie précédemment, procéder à la réalisation d'un ou de plusieurs couches de décor préalable, cette couche ou ces couches étant alors pris ou prisent en sandwich entre la couche de décor finale et la paroi interne du flacon.

Ainsi, et par exemple, on peut pulvériser un liquide ou une poudre d'une première couleur (C1) pour former une première couche de décors de couleur ayant une première couleur (C1). Puis, dans une étape intermédiaire, on peut détruire la couche dans des zones déterminées, et ce, par exemple, par méthode laser. Dans cette opération de destruction de la couche, on peut faire un marquage sans couleur, puis, on pulvérise dans le flacon un liquide ou une poudre d'une deuxième couleur (C2), pour réaliser une deuxième couche de décor ayant la deuxième couleur. Cette deuxième couche ne sera visible de l'extérieur que dans les zones où la première couche de première couleur a été détruite. On pourra ainsi, et ce, grâce au procédé, réaliser des décors de différentes couleurs, ou détruire, par exemple, par laser, la ou les couches de décor interne, pour laisser une zone sans décor, afin de rendre visible le niveau du contenu du flacon. On appliquera ensuite la couche finale inerte, couche finale en contact permanent avec le contenu, afin de garantir aucune migration dans le temps des produits chimiques ou colorants contenus dans la couche de décor et le produit contenu dans le flacon.

Ajoutons que le procédé permet aussi de réaliser un décor interne avec, par exemple, trois couches de couleurs différentes, et qu'en fonction de ces couches il sera possible de détruire seulement la première couche pour laisser apparaître dans ces zones détruites la deuxième couche, tandis que les deux premières couches pourraient être détruites dans d'autres zones, pour laisser apparaître la troisième couche, le laser ne détruisant que les couches de laque avec pigments.

Selon un autre mode d'exécution, on réalise un décor interne par plus de deux couches de couleurs différentes et l'on détruit seulement la première couche pour laisser apparaître dans ces zones détruites la deuxième couche, tandis que les deux premières couches sont détruites dans d'autres zones pour laisser apparaître la troisième couche.

Il est aussi décrit le flacon décoré selon le procédé de l'invention, qui est caractérisé en ce qu'il comprend un décor intérieur.

La couche de revêtement interne faisant barrage, à la détérioration du contenu du flacon, est inorganique, et comme nous l'avons vu précédemment obtenue avantageusement et par exemple par la méthode dite SOLGEL, le produit comprend une matrice de silice (de 50 à 95 %, préférentiellement 90 %) et des minéraux tels que du Zircon, du Titan, ou d'un mélange de ceux-ci. Les pigments ajoutés à la matrice de silice sont, par exemple, des pigments de colorations destinés à colorer la couche interne. Ces pigments ont, par exemple un mélange d'oxydes métalliques tels que de l'oxyde de bismuth, de l'oxyde de zinc, de l'oxyde d'étain, de cuivre, de chrome de sodium et d'alumine. Les pigments destinés à la coloration de la couche sont aussi, et, par exemple, de l'aluminate de cobalt, du noir de carbone voire du graphite. Les pigments sont : soit des pigments inorganiques, soit de pigments organiques qui sont emprisonnés dans la matrice à base de silice de la couche, et ainsi lesdits pigments ne peuvent pas migrer dans le contenu du flacon. Le liquide pulvérisé, pour réaliser la couche interne en contact avec le contenu du flacon, est un polymère inorganique, qui grâce au procédé SOLGEL est obtenu par des réactions chimiques simples et à une température proche de la température ambiante (20 à 150°C). La synthèse est effectuée à partir d'alcoolats (liquide provenant de la distillation de l'alcool sur des substrats aromatiques), de silicium et d'un groupement organique alkyle (molécules dérivées des hydrocarbures (alcanes) ne comportant que des liaisons covalentes simples). Les réactions de base s'effectuent autour de la température ambiante, il est donc possible d'associer des parties organiques à la partie minérale sans qu'elles subissent de dégradation thermique ultérieure. Cela consiste à dissoudre la partie organique dans le solvant de synthèse. Le gel minéral se forme alors en tenant compte de la présence des molécules invitées. Une limitation de cette approche est la proportion faible d'organique inséré dans le réseau minéral. La seconde possibilité consiste à utiliser des précurseurs comportant à la fois des fonctions hydrolysables qui génèrent le réseau silicaté et des fonctions organiques qui restent greffées au squelette minéral. Ces chaînons organiques sont liés au silicium via une liaison Si-C qui est insensible à l'hydrolyse. Selon sa nature, la partie organique peut jouer le rôle de formateur ou de modificateur par analogie aux formateurs et aux modificateurs des verres élaborés à haute température.

Bien entendu, l'invention n'est pas limitée aux modes de réalisation décrits, mais elle comprend aussi tous les équivalents techniques ainsi que leurs combinaisons qui ne sortent pas du cadre des revendications annexées. Selon des variantes, on peut prévoir l'une et/ou l'autre des dispositions suivantes :
- Le procédé de décoration d'un flacon transparent ou translucide en verre, destiné au domaine de la cosmétique, pour contenir un produit cosmétique tel qu'un parfum, ou similaire, dont la décoration est réalisée à l'intérieur du flacon, qui consiste à réaliser au moins un revêtement sur la surface interne du flacon, par pulvérisation d'un brouillard de liquide à l'intérieur du flacon, le liquide est inerte chimiquement de caractéristique proche du verre de façon à ce que le revêtement interne constitue une couche de protection faisant barrage pour protéger le produit cosmétique de toute migration éventuelle nuisible à sa qualité, comme par exemple nuisible à sa fragrance et/ou sa coloration ainsi qu'à sa conservation ;
- le liquide pulvérisé est un polymère inerte à base de silice ;
- des pigments sont ajoutés au polymère inerte ;
- le polymère inerte est réalisé par le procédé dit "SOLGEL" ;
- les pigments ajoutés à la matrice de silice sont des pigments de coloration ;
- les pigments de coloration sont des pigments inorganiques ;
- les pigments de coloration sont des pigments organiques ;
- on pulvérise le liquide à température ambiante dans le flacon chaud ;
- après la pulvérisation il est procédé à un séchage puis un refroidissement ;
- préalablement à la pulvérisation du revêtement interne inerte, il est procédé à la réalisation d'une ou plusieurs couches de décors ;
- le flacon, pour produits cosmétiques, est décoré intérieurement par le procédé de décoration, le flacon est transparent ou translucide, en verre ou en matière plastique ;
- le revêtement interne en contact avec le produit cosmétique est inerte chimiquement de caractéristique proche du verre ;
- le revêtement est à base de silice ;
- le revêtement à base de silice, comprend des pigments de coloration ;
- les pigments ajoutés à la matrice de silice sont des pigments inorganiques ou organiques ;
- les pigments sont des oxydes métalliques ;
- la paroi interne du flacon comprend sous la couche inerte de revêtement interne au moins une couche de décoration ;
- la ou les couches de décorations sont des laques époxy.

## Revendications

1. Procédé de décoration d'un flacon transparent ou translucide en verre, destiné au domaine de la cosmétique, pour contenir un produit cosmétique tel qu'un parfum ou similaire, et dont la décoration est réalisée à l'intérieur du flacon, dans lequel il est réalisé au moins une couche de décoration sur la surface interne du flacon, par pulvérisation à l'intérieur du flacon, dans lequel on pulvérise un brouillard de liquide à l'intérieur du flacon qui réalise un revêtement interne formé par une couche de décoration interne en contact avec le produit cosmétique d'un produit polymère inorganique qui comprend une matrice à base de silice et des pigments ajoutés à la matrice de silice et emprisonnés dans la matrice à base de silice et ne pouvant migrer dans le contenu du flacon, inerte chimiquement et de caractéristique proche du verre, le revêtement interne faisant barrage en isolant ledit produit, pour protéger le produit cosmétique de toute migration éventuelle nuisible à sa qualité, comme par exemple sa fragrance et/ou sa coloration ainsi qu'à sa conservation, **caractérisé en ce qu'**on pulvérise à l'aide d'un pistolet pneumatique basse pression qui comporte une rallonge pouvant s'introduire à l'intérieur du flacon, portant à son extrémité une buse de pulvérisation,
pendant la pulvérisation, on met en mouvement relatif la buse et le flacon afin de déposer une couche homogène.

2. Procédé selon la revendication 1, dans lequel la buse de pulvérisation est déplacée verticalement en tournant sur elle-même.

3. Procédé selon la revendication 1, dans lequel on déplace verticalement la buse et on fait tourner le flacon autour de l'axe constitué par la buse.

4. Procédé selon la revendication 1, dans lequel on met en mouvement le flacon, en le déplaçant verticalement et en le faisant tourner par rapport à la buse de pulvérisation.

5. Procédé selon l'une quelconque des revendications 1 à 4, dans lequel la buse est constituée par une canalisation centrale comprenant un ensemble de trous radiaux reliés à un réservoir contenant le produit à pulvériser.

6. Procédé selon l'une quelconque des revendications 1 à 5, caractérisé en ce l'on pulvérise le liquide pour réaliser la couche de décoration interne inerte faisant barrage à température ambiante dans le flacon chaud et, dans une étape précédant la pulvérisation, il est procédé au chauffage du flacon.

7. Procédé selon la revendication 6, **caractérisé en ce qu'**après la pulvérisation du liquide pour réaliser la couche de décoration interne inerte faisant barrage, il est procédé à un séchage puis à un refroidissement.

8. Procédé selon l'une quelconque des revendications 1 à 7, **caractérisé en ce qu'**il est réalisé seulement une couche de décoration sur la surface intérieure du flacon et **en ce que** la couche de décoration interne inerte faisant barrage forme le revêtement interne réalisé directement sur le verre.

9. Procédé selon l'une quelconque des revendications 1 à 7, **caractérisé en ce que** préalablement à la pulvérisation du produit liquide pour réaliser la couche de décoration interne inerte faisant barrage, il est procédé à la réalisation d'une ou plusieurs couches de décor, prise ou prises en sandwich entre la paroi interne du flacon et la couche dé décor finale.

10. Procédé selon la revendication 9, **caractérisé en ce qu'**une couche de décor est une couche de laque avec pigments.

11. Procédé selon l'une quelconque des revendications 9 à 10, **caractérisé en ce que** pour former une couche de décor, on pulvérise un liquide ou une poudre.

12. Procédé selon l'une quelconque des revendications 9 à 11, **caractérisé en ce qu'**on forme une couche de décor, puis on détruit la couche dans des zones déterminées, en particulier par méthode laser, et on applique la couche finale inerte.

13. Procédé selon l'une quelconque des revendications 9 à 11, **caractérisé en ce qu'**on réalise un décor interne par plus de deux couches de couleurs différentes, tandis que les deux premières couches sont détruites dans d'autres zones pour laisser apparaître la troisième couche.

## Patentansprüche

1. Verfahren zum Verzieren eines transparenten oder durchscheinenden Flakons aus Glas, der für den Kosmetikbereich zur Aufnahme eines Kosmetikprodukts wie eines Parfüms o. ä. bestimmt ist und bei dem die Verzierung im Innern des Flakons durchgeführt wird, bei dem mindestens eine Zierschicht auf der inneren Oberfläche des Flakons durch Sprühen im Innern des Flakons realisiert wird, **dadurch gekennzeichnet, dass** ein Flüssigkeitsnebel im Innern des Flakons versprüht wird, durch den eine innere Beschichtung realisiert wird, die durch eine mit dem Kosmetikprodukt in Kontakt stehende innere Zierschicht aus einem inorganischen Polymerprodukt gebildet wird, das eine Matrix auf Basis von Siliziumdioxid und beigefügter Pigmente umfasst, die der Siliziumdioxidmatrix hinzugefügt und in der Matrix auf Basis von Siliziumdioxid eingeschlossen sind und nicht in den Inhalt des Flakons migrieren können, wobei die innere Zierschicht chemisch inert ist und eine glasähnliche Charakteristik hat, wobei die innere Beschichtung eine Sperre bildet, indem sie das Produkt isoliert, um das Kosmetikprodukt vor jeder Migration zu schützen, die eventuell schädlich für seine Eigenschaft, beispielsweise seinen Duft und/oder seine Farbe, sowie seine Haltbarkeit ist und, dass das Sprühen mit Hilfe einer Niederdruck-Druckluftpistole durchgeführt wird, die ein Verlängerungsstück aufweist, das in das Innere des Flakons eingeführt werden kann und an seinem Ende eine Sprühdüse trägt, wobei die Düse und der Flakon zum Auftragen einer homogenen Schicht während des Sprühens bezüglich einander in Bewegung gesetzt werden.

2. Verfahren nach Anspruch 1, wobei die Sprühdüse vertikal verschoben wird, während sie sich um sich selbst dreht.

3. Verfahren nach Anspruch 1, wobei die Düse vertikal verschoben wird und der Flakon um die durch die Düse dargestellte Achse gedreht wird.

4. Verfahren nach Anspruch 1, wobei der Flakon in Bewegung gesetzt wird, indem er vertikal verschoben und bezüglich der Sprühdüse gedreht wird.

5. Verfahren nach einem der Ansprüche 1 bis 4, wobei die Düse aus einer mittleren Leitung besteht, die eine Gruppe von radialen Löchern umfasst, die mit einem das zu versprühende Produkt enthaltenden Reservoir verbunden sind.

6. Verfahren nach einem der Ansprüche 1 bis 5, **dadurch gekennzeichnet, dass** die Flüssigkeit zur Realisierung der inerten inneren Sperr-Zierschicht bei Umgebungstemperatur im heißen Flakon versprüht wird und dass der Flakon in einem dem Sprühen vorausgehenden Schritt erhitzt wird.

7. Verfahren nach Anspruch 6, **dadurch gekennzeichnet, dass** nach dem Sprühen der Flüssigkeit zur Realisierung der inerten inneren Sperr-Zierschicht eine Trocknung und dann eine Kühlung durchgeführt werden.

8. Verfahren nach einem der Ansprüche 1 bis 7, **dadurch gekennzeichnet, dass** auf der inneren Oberfläche des Flakons nur eine Zierschicht realisiert wird und dass die inerte innere Sperr-Zierschicht die direkt auf dem Glas realisierte innere Beschichtung bildet.

9. Verfahren nach einem der Ansprüche 1 bis 7, **dadurch gekennzeichnet, dass** vor dem Sprühen des flüssigen Produkts zur Realisierung der inerten inneren Sperr-Zierschicht eine oder mehrere Zierschichten realisiert werden, die sandwichartig zwischen der inneren Wand des Flakons und der abschließenden Zierschicht angeordnet sind.

10. Verfahren nach Anspruch 9, **dadurch gekennzeichnet, dass** eine Zierschicht eine Lackschicht mit Pigmenten ist.

11. Verfahren nach einem der Ansprüche 9 bis 10, **dadurch gekennzeichnet, dass** zum Bilden einer Zierschicht eine Flüssigkeit oder ein Pulver versprüht wird.

12. Verfahren nach einem der Ansprüche 9 bis 11, **dadurch gekennzeichnet, dass** eine Zierschicht gebildet wird, wonach die Schicht in bestimmten Bereichen insbesondere durch eine Lasermethode zerstört wird und sodann die inerte abschließende Schicht aufgebracht wird.

13. Verfahren nach einem der Ansprüche 9 bis 11, **dadurch gekennzeichnet, dass** eine innere Verzierung durch mehr als zwei Schichten unterschiedlicher Farben realisiert wird, während die beiden ersten Schichten in anderen Bereichen zerstört werden, um die dritte Schicht zum Vorschein kommen zu lassen.

## Claims

1. Method for decorating a transparent or translucent glass bottle for the cosmetic field, for containing a cosmetic product such as a perfume or the like, the decoration of which is made inside the bottle, wherein it is performed at least one layer of decoration on the inner surface of the bottle by spraying inside the bottle,
wherein a liquid mist is sprayed inside the bottle, which provides an inner coating formed by an inner decoration layer in contact with the cosmetic product from an inorganic polymer product, which comprises a silica-based matrix and pigments added to the silica matrix and trapped in the silica-based matrix and prevented from migrating into the content of the bottle, chemically inert and with glass-like features, the inner coating forming a barrier by isolating the product in order to protect the cosmetic product from any migration which might be detrimental to its quality, for example its fragrance and/or its colour as well as its preservation,
**characterised in that** the spray is made by using a low-pressure air gun having an extension which can be introduced inside the bottle and a spray nozzle on its end,
the nozzle and the bottle being moved relative to one another during spraying in order to apply a homogeneous layer.

2. Method as claimed in claim 1, wherein the spray nozzle is moved vertically whilst rotating about itself.

3. Method as claimed in claim 1, wherein the nozzle is moved vertically and the bottle is rotated about the axis formed by the nozzle.

4. Method as claimed in claim 1, wherein the bottle is moved by displacing it vertically and rotating it relative to the spray nozzle.

5. Method as claimed in any one of claims 1 to 4, wherein the nozzle consist of a central pipe having a set of radial holes connected to a tank containing the product to be sprayed.

6. Method as claimed in any one of claims 1 to 5, **characterised in that** the liquid for creating the inert, inner layer of decoration acting as a barrier is sprayed into the hot bottle at ambient temperature and the bottle is heated in a step preceding spraying.

7. Method as claimed in claim 6, **characterised in that** after spraying the liquid to create the inert, inner layer of decoration acting as a barrier, a drying process is run followed by cooling.

8. Method as claimed in any one of claims 1 to 7, **characterised in that** only one layer of decoration is applied to the inner surface of the bottle and the inert, inner layer of decoration acting as a barrier forms the inner coating applied directly to the glass.

9. Method as claimed in any one of claims 1 to 7, **characterised in that** prior to spraying the liquid product to create the inert, inner layer of decoration acting as a barrier, one or more decorative layers are applied, the latter then being sandwiched between the inside wall of the bottle and the final decorative layer.

10. Method as claimed in claim 9, **characterised in that** a decorative layer is a layer of lacquer with pigments.

11. Method as claimed in any one of claims 9 to 10, **characterised in that** a decorative layer is formed by spraying a liquid or a powder.

12. Method as claimed in any one of claims 9 to 11, **characterised in that** a decorative layer is formed, after which the layer is destroyed in specific areas, in particular by a laser process, and the final inert layer is then applied.

13. Method as claimed in any one of claims 9 to 11, **characterised in that** an inner decoration is created by more than two layers of different colours, whilst the two first layers are destroyed in other areas to allow the third layer to show through.
